# EUROPEAN PATENT SPECIFICATION

(11) **EP 0 683 120 B1**
(45) Date of publication and mention of the grant of the patent: **03.02.1999**
(21) Application number: 95401137.5
(22) Date of filing: 16.05.1995
(51) Int. Cl.: B65G 41/00, E21D 9/12, B62D 55/065, B65G 17/06, B65G 17/42

(54) **Conveyor for continuous haulage system**
Förderer für ein System zur kontinuierlichen Förderung
Convoyeur pour installation de transport continu

(30) Priority: 20.05.1994 ZA 943496; 30.11.1994 ZA 949521; 30.11.1994 ZA 949522
(43) Date of publication of application: 22.11.1995
(73) Proprietor: Sasol Mining (Proprietary) Limited, Rosebank, Johannesburg 2196 (ZA)
(72) Inventor: Vergeer, Willem Cornelis, Secunda, 2302 (ZA); Koch, Peter, Secunda, 2302 (ZA)
(74) Representative: Joly, Jean-Jacques

(56) References cited:
- CH-A- 621 746
- DE-A- 3 537 131
- DE-C- 672 279
- GB-A- 2 186 857

## Description

This invention relates to a conveyor for a continuous haulage system. In this specification a continuous haulage system is described for use in underground mining operations, especially mining operations involving continuous mining machines. However, the invention is not confined to mining applications.

Numerous kinds of articulated continuous haulage systems have been developed to convey broken material underground. Such systems are characterized in that they support some kind of conveyor system and are either self-propelled or are capable of being hauled by suitable haulage means. Systems of this kind are advantageous in that they provide for continuous transport of the discharge from a continuous mining machine as the machine advances into a mine face. Such haulage systems are particularly useful in coal mining operations but are not confined thereto.

In order to be effective, these systems generally have to be of considerable length and therefore have to be capable of negotiating bends and turns in the underground mining environment. They also have to be capable of accommodating uneven ground conditions. This means that the conveyor system supported by a continuous haulage system must likewise be pliable in all directions and especially in lateral directions.

This requirement of pliability of the conveyor system has proved to be problematic and has tended to contribute substantially to the cost of continuous haulage system.

South African patent number 87/0989 to Bodimer discloses an articulated conveyor train which is supported by the floor of a mine and which is capable of traversing a curvilinear path while maintaining the conveyor run position of an orbital conveying belt in an operative mode. The conveyor train is supported on the lower run of a centrally located crawler chain which is capable of driving the train along the mine surface. Steering means are provided at the receiving end of the train and optionally at the discharge end thereof. The orbital conveying belt is of the type originally disclosed in United States patent number 4,387,801 to Hoover. The Hoover belt is a pre-controlled stretchable belt formed of a stretchable elastic material having the ability to be pre-stretched or elongated so as to maintain tension within the belt when going around curves. It is necessary to control and limit the elongation of the belt by various methods described in United States patent number 4,282,298 to Becker and United States patent number 4,474,289 to Densmore.

Another prior art conveyor system disclosed in US-A-2 250 933 is adapted for conveying articles such as bags, barrels and boxes. The conveyor offers some flexibility by the use of spring steel mounting strips between adjacent conveyor sections.

Finally, US-A-2 966 984 discloses a conveyor apparatus adaptable to follow a winding path. The basic structure is based on an endless belt on which material-carrying pans are bolted.

It is an object of the invention to provide a conveyor system for a continuous haulage system which is of relatively simple construction and effective in use or which at least provides a useful alternative to prior art systems.

According to the invention there is provided a conveyor system for a self-propelled continuous haulage system which comprises an elongated articulated body made up of a plurality of support frames aligned in end-to-end abutting relationship, the conveyor system being carried by and supported centrally on the articulated body of the haulage system, the conveyor system being characterized in that it comprises a plurality of belt sections arranged endlessly in end-to-end overlapping relationship, a plurality of carrier members, each belt section being connected to an associated carrier member such that adjacent belt sections permit relative lateral displacement therebetween, a conveyor chain to which the carrier members are connected, the conveyor chain being located centrally on the continuous haulage system, drive means for driving the conveyor chain to advance the endless conveyor system in orbital fashion along the length of the body of the haulage system in such a manner that the conveyor system has an upper load carrying run and a lower return run, the carrier members being guided in a guide channel in each of the support frames.

Preferably each belt section is connected to its associated carrier member at a position where the belt section overlaps an underlying adjacent belt section, the connection between the belt section and its associated carrier member being made with one or more bolts passing through an aperture in the underlying belt section.

Each carrier member may comprise two parts joining at opposed faces the faces being recessed to accommodate and receive the conveyor chain therein.

The drive means for driving the conveyor chain in orbital fashion may comprise a drive sprocket driven by an electrically or hydraulically powered motor located at one or both ends of the haulage system.

Preferably, the continuous haulage system on which the conveyor system is carried and supported has traction means in the form of a pair of endless traction chains carried on opposite sides of the support frames and spanning the length of the body, the chains engaging the ground in an operative condition of the system, and drive means for driving the chains to provide tractive and steering effort for the system.

Preferred embodiments of the invention will now be described by way of example with reference to the accompanying drawings in which;
- Figure 1: is a side view of part of a continuous haulage system constructed according to the invention and shown in sections;
- Figure 2: is a side view of an end frame of the haulage system showing the arrangement of the traction chains of the system;
- Figure 3: is a plan view of the end frame of Figure 2, with the traction chains shown in broken lines;
- Figure 4: is a section through the end frame taken on line IV-IV in Figure 2, without the traction chains;
- Figure 5: is a schematic perspective view of the end frame of the haulage system showing the arrangement of the traction chains and how they cross over from one side of the frame to the other;
- Figure 6: is a side view of a support frame of the haulage system carrying a booster drive for a traction chain of the haulage system;
- Figure 7: is a plan view of the support frame of Figure 6 in which parts have been removed for the sake of clarity;
- Figures 8 and 9: are side views of an alternative support frame of the haulage system embodying a pair of chain guides in operative and inoperative positions respectively;
- Figure 10: is a side view of part of the haulage system of Figure 1 illustrating an hydraulic tensioner for a traction chain;
- Figure 11a: is a perspective view of an individual support frame of the haulage system of Figure 1;
- Figure 11b: is an enlarged detail of part of a chain guide used on the support frame;
- Figure 12: is a side view of the support frame of Figure 11;
- Figure 13: is an end view thereof, carrying a conveyor system;
- Figures 14 and 15: are perspective views of parts of a support frame showing how adjacent support frames are linked together;
- Figures 16 and 17: are plan and side views respectively of support frames of the haulage system illustrating the flexibility of the elongated body of the haulage system;
- Figure 18: is an exploded perspective view of a chain guide mounted on a support frame for the upper run of a traction chain of the haulage system;
- Figure 19: is a perspective view of a support frame of the haulage system illustrating part of a conveyor system carried by the haulage system;
- Figure 20: is a perspective view from below of part of the conveyer system of the haulage system;
- Figure 21: is an exploded perspective view illustrating the manner in which belting making up the conveyor system is fixed to a carrier of the conveyor system;
- Figure 22: is a perspective view of an end frame of the haulage system without the traction chains and other parts thereof, further illustrating the conveyor system of the haulage system; and
- Figure 23: is a side view of part of the haulage system approaching a ramp for purposes of discharging material.

In the drawings like parts are identified by like numerals and various parts are omitted where appropriate, for the sake of clarity.

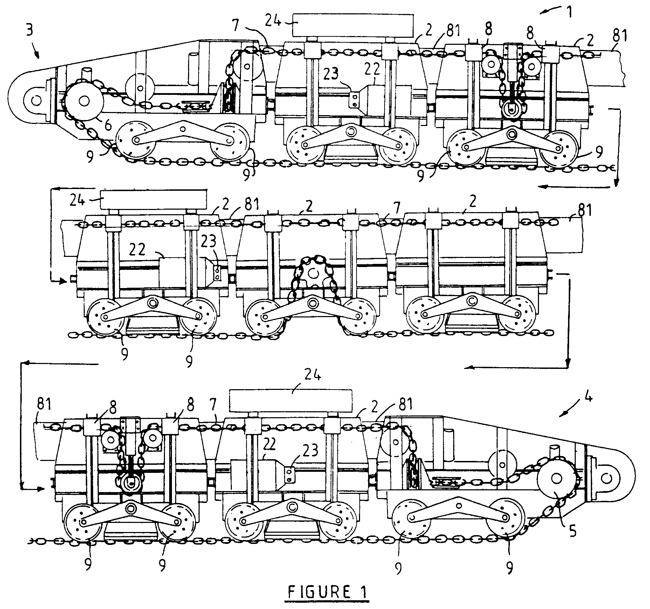

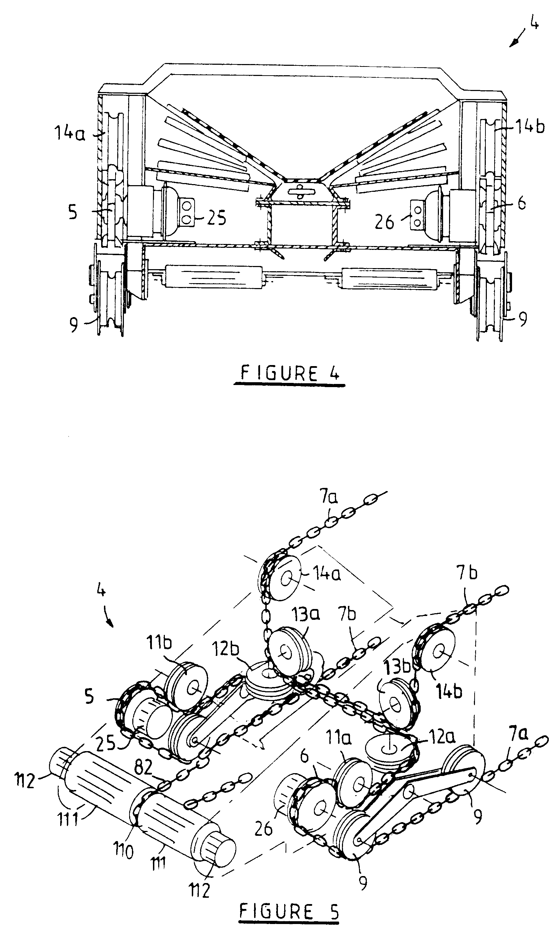

A self-propelled continuous haulage system 1 comprises an elongated articulated body made up of a plurality of support frames 2 aligned in end to end abutting relationship (Figure 1). A loading end frame 3 is located at one end of the haulage system and a discharge end frame 4 is located at the opposite end thereof. In this embodiment of the invention the end frames 3, 4 are of the same construction but they need not necessarily be so. The end frames 3, 4 each carry a pair of drive and steering sprockets 5, 6 respectively located at the sides of the frames (Figures 1-5).

A pair of endless round link traction chains 7 is located at the sides of the body of the haulage system, spanning the length thereof and passing over the sprockets 5,6. The traction chains 7 have an upper run carried in upper chain guides 8 located above ground level and a lower, ground engaging run passing under sheave wheels 9 (Figures 1, 10, 11a). The lower run of the chains 7 may optionally also pass under channel guides 10.

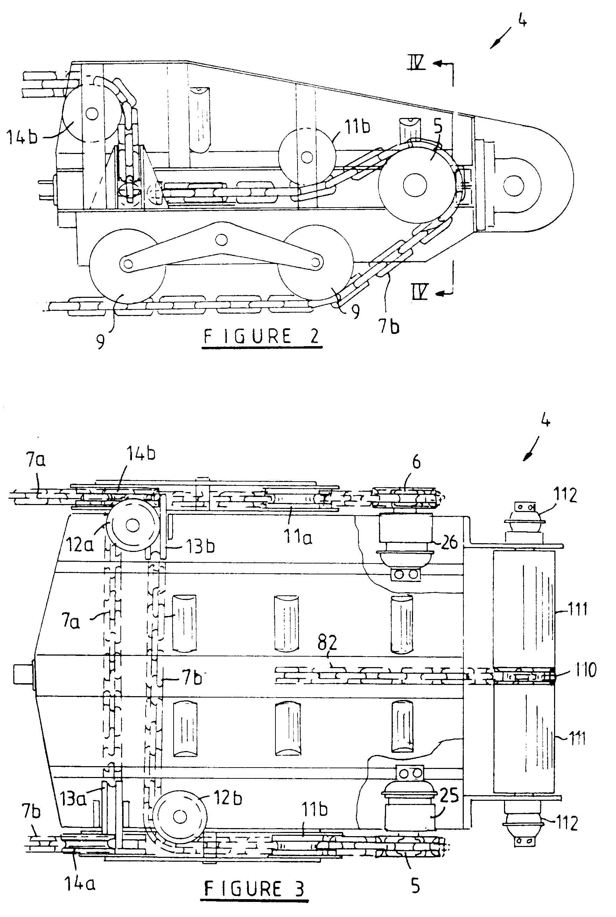

The arrangement of the traction chains 7 is characterized in that each chain has its lower run located along one side of the support frames 2 and its upper run located along the opposite side thereof. This is achieved by diverting the lower run of each chain from one side of the haulage system to the other side at each of the loading end frame 3 and discharge end frame 4. Thus, as shown in Figures 2-5, the traction chain 7a passes from its lower run to its upper run over the drive and steering sprocket 6, under a sheave wheel 11a, past a sheave wheel 12a, under a sheave wheel 13a and over a sheave wheel 14a. The traction chain 7b likewise passes over the drive and steering sprocket 5, under a sheave wheel 11b, past a sheave wheel 12b, under a sheave wheel 13b and over a sheave wheel 14b.

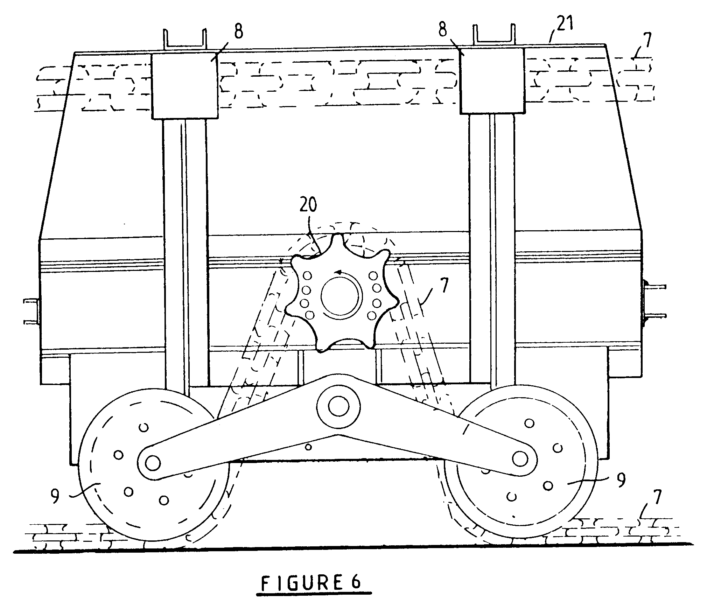

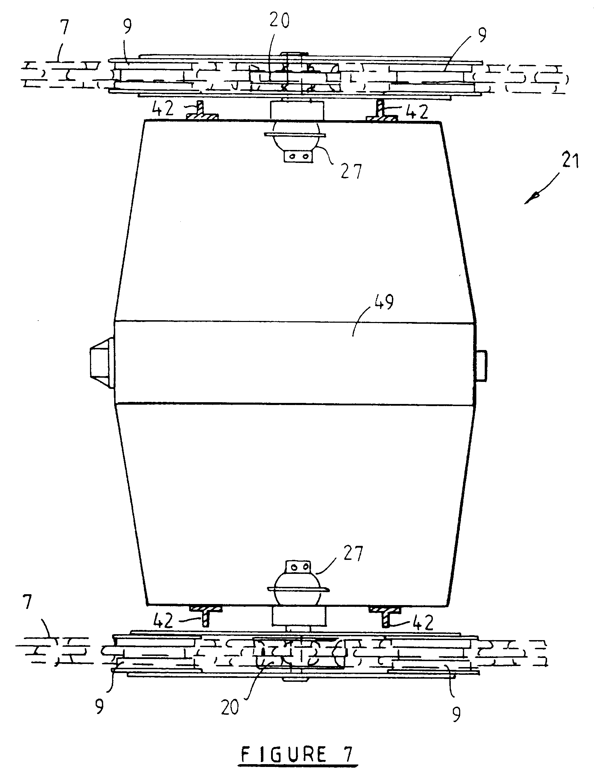

At regular intervals along the length of the body of the haulage system intermediate drive sprockets 20 are provided on intermediate drive frames 21 of the haulage system (Figures 6, 7). The intermediate drive sprockets 20, over which the traction chains 7 pass, serve as booster drives for the traction chains.

The drive and steering sprockets 5, 6 and the intermediate drive sprockets 20 may be driven by suitable electric or hydraulic means. In this embodiment of the invention, electric motors 22 are provided which drive hydraulic pumps 23 fed from reservoirs 24 (Figure 1). The hydraulic pumps 23 are hydraulically connected to hydraulic motors 25, 26 which drive the drive sprockets 5, 6 respectively and to hydraulic motors 27 which drive the intermediate drive sprockets 20 (Figures 1, 3, 4, 5, 7).

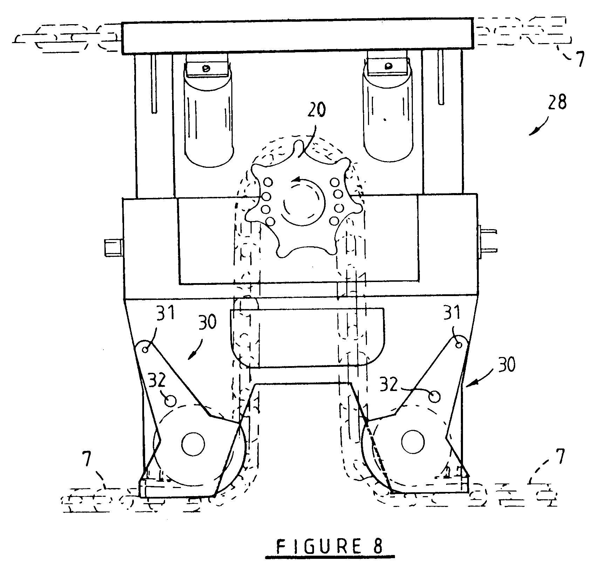

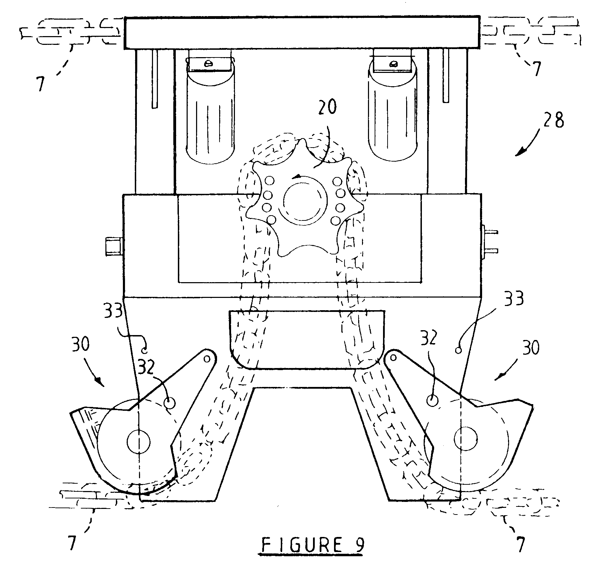

In an alternative arrangement shown in Figures 8 and 9, an intermediate drive frame 28 is provided of different construction to the intermediate drive frame 21 shown in Figures 6 and 7. In this arrangement, the traction chain 7 passes over the intermediate drive sprocket 20 via chain guides 30. The chain guides 30, which have a bell-shaped profile, are pivoted to the intermediate drive frame 28 by means of pivots 32. In their operative position shown in Figure 8, the guides 30 are secured in position by means of studs 31 which locate in holes 33 in the frame 28. When the studs are withdrawn the guides 30 can be pivoted outwardly as shown in Figure 9 to provide slack in the chain 7 to enable it to be lifted from the sprocket 20. This facilitates servicing or replacement of the sprockets 20 and the motors 27.

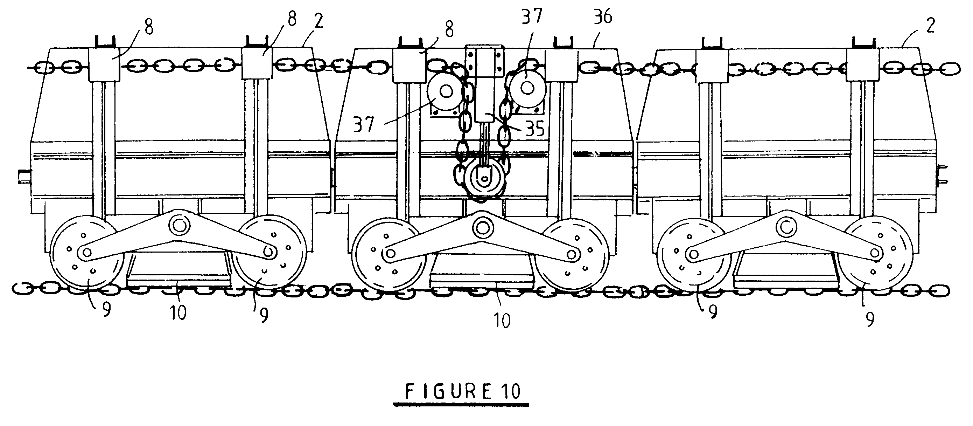

Hydraulic or mechanical take-up tensioners 35 are mounted on tensioner frames 36 which may be of similar construction to the support frames 2 of the haulage system (Figure 10). The tensioners 35, over which the traction chains 7 pass via sheave wheels 37, serve to maintain suitable tension on the traction chains during use of the haulage system.

Suitable control means (not shown) are provided to operate the hydraulic motors 25, 26, 27 to drive the traction chains 7, both separately and in unison, to achieve tramming and steering of the haulage system 1. Tramming is achieved by driving the traction chains simultaneously and steering is achieved by driving one traction chain in preference to or faster than the other chain.

When negotiating turns, any slack which would normally occur on the inner traction chain 7, is automatically compensated for because the chains cross over from one side of the haulage system to the opposite side thereof, as described above. Turning of the haulage system 1 does therefore not create slack in the traction chains 7.

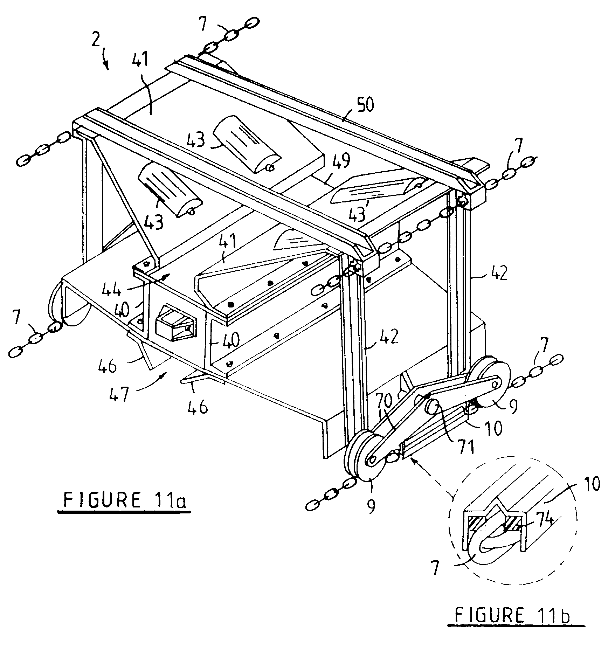

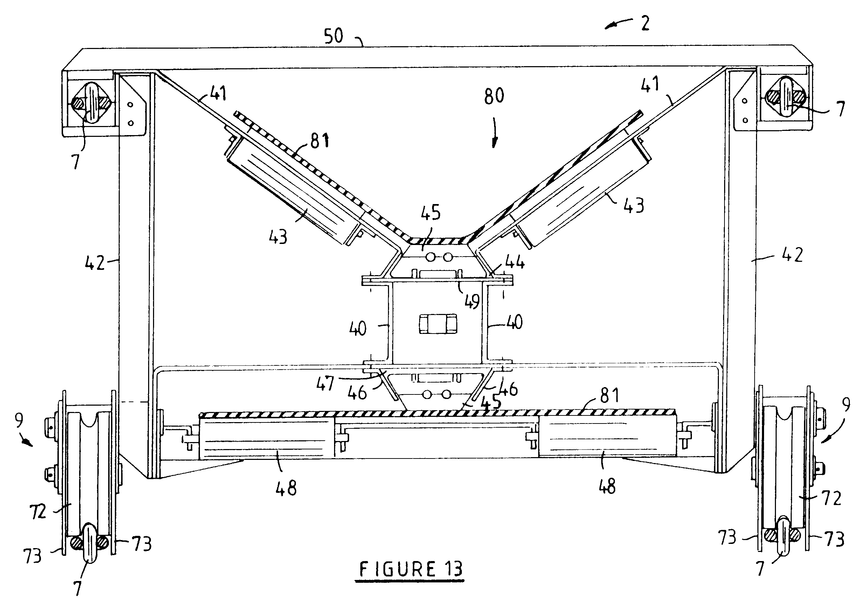

Each support frame 2 of the haulage system 1 comprises a pair of beams 40 on which are mounted a pair of diverging upper mounting plates 41 supported on posts 42 (Figures 11a, 12, 13). Idler rollers 43 project through apertures in the mounting plates 41. At their lower ends the mounting plates 41 are shaped to form a guide channel 44 for carrier members 45 which are more fully described hereunder. Below the beams 40 guide plates 46 are provided which are similarly shaped to form a return guide channel 47 for the carrier members 45. Below the return guide channel 47 idler rollers 48 are mounted on the support frame 2 (Figure 13).

A removable wear plate 49 is provided which forms the base of the guide channel 47 and on which the carrier members 45 seat (Figure 13).

Beams 50 are mounted on the support frames 2 spanning the mounting plates 41.

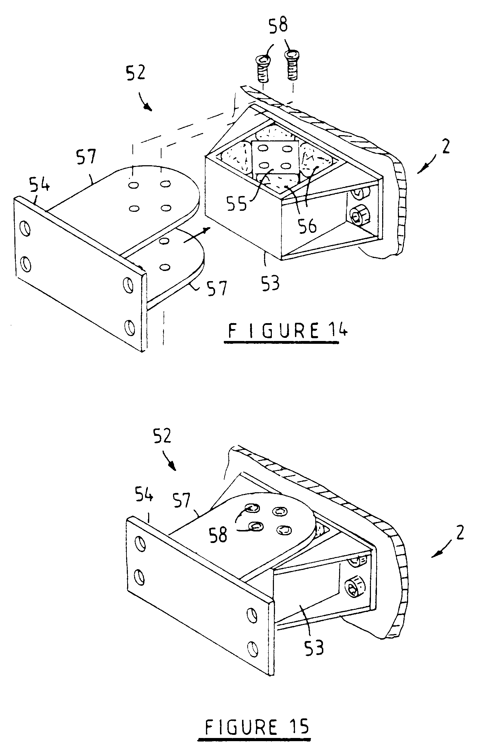

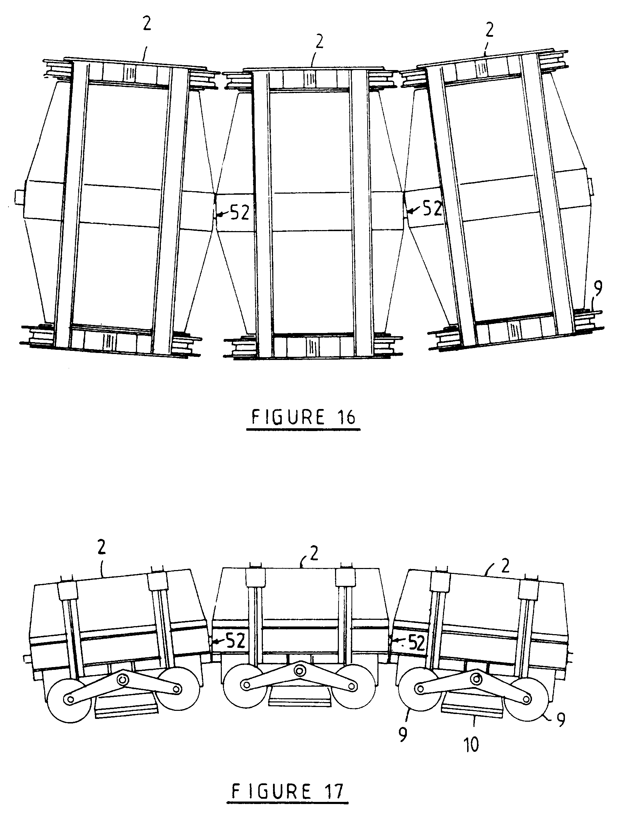

The support frames 2, end frames 3, 4, intermediate drive frames 21 and tensioner frames 36 are linked by flexible couplings 52 to permit limited relative universal movement between adjacent frames (Figures 14-17). The flexible couplings 52 enable the haulage system to flex in three dimensions to negotiate uneven mining terrain.

Each flexible coupling 52 may be of conventional, commercially available construction, consisting of a coupling box 53 and a connector 54 (Figures 14, 15). The coupling boxes 53 may, for example, be mounted on the front ends of the support frames 2, intermediate drive frames 21 and tensioner frames 36, whilst the connectors 54 may be mounted on the rear thereof. The coupling box 53 houses a steel core 55 surrounded by rubber cushions 56. The connector 54 has parallel flanges 57 which overlie the coupling box 53 in an operative position, enabling the flanges to be bolted to the core 55 by means of bolts 58. Alternative forms of coupling the frames together may be used, such as ball and socket formations (not shown).

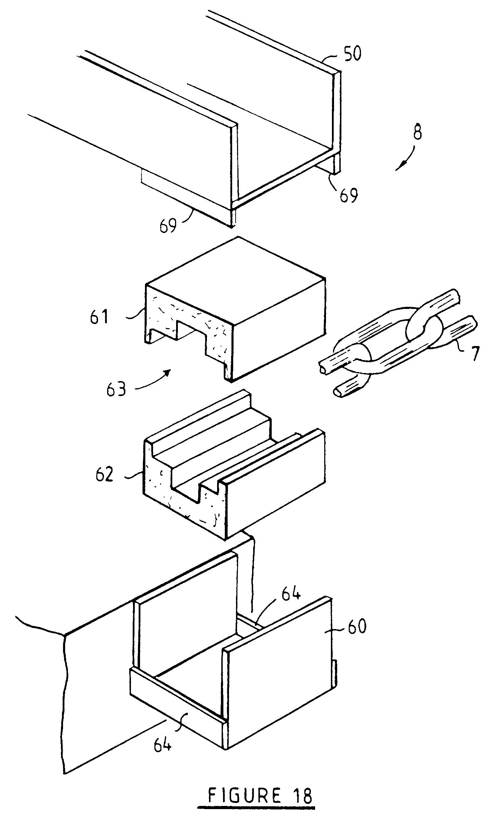

As stated above, each traction chain 7 has an upper run located in upper chain guides 8 and a lower, ground engaging run passing under sheave wheels 9 and channel guides 10. As shown in Figure 18, each chain guide 8 comprises a housing 60 adapted to receive a pair of wear pads 61, 62. The wear pads define between them an opening 63 of cross configuration which is shaped to accommodate the links of a traction chain 7. The lower wear pad 62 seats on the base of the housing 60 where it is trapped by side walls 64 whilst the upper wear pad 61 is held in position by a beam 50 which has dependant flanges 69 preventing dislodgment of the upper wear pad. The wear pads 61, 62 may conveniently be made of a hard wearing, low-friction material such as SOLIDUR (Registered Trade Mark).

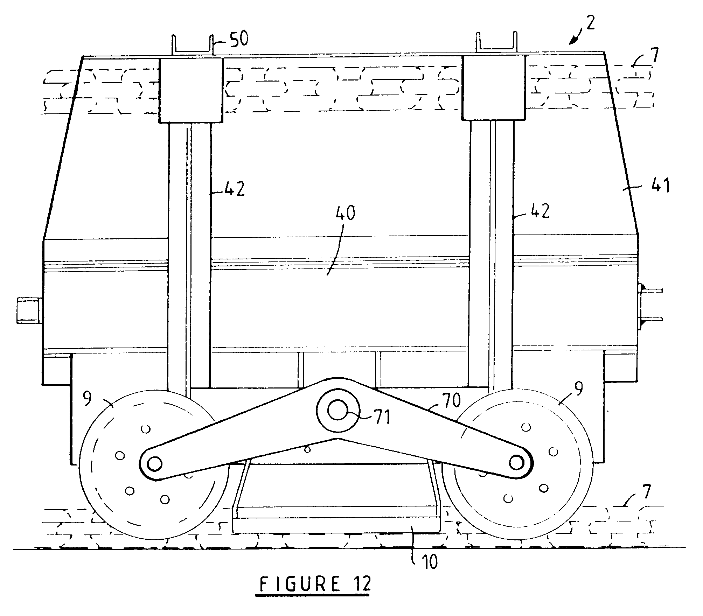

The sheave wheels 9 under which the traction chains 7 pass are mounted in pairs on yokes 70 (Figures 11a, 12). Each yoke 70 is pivoted to a support frame 2, end frame 3, intermediate drive frame 21 or tensioner frame 36, as the case may be, by means of a pivot 71 for movement in a vertical plane. Each sheave wheel 9 comprises a grooved disc 72 located between a pair of face plates 73 (Figure 13). The sheave wheels 9, mounted in the manner described, serve to lessen frictional forces on the traction chains 7 and further serve to prevent the traction chains 7 from being displaced laterally relative to the haulage system in use of the system.

Optionally, a channel guide 10 is provided between the sheave wheels 9 to assist further in preventing lateral displacement of the traction chains 7. The channel guides 10 may be mounted on the yokes 70 carrying the sheave wheels 9 and are preferably fitted with wear pads 74 made of the same material as the wear pads 61, 62 referred to above (Figure 11b).

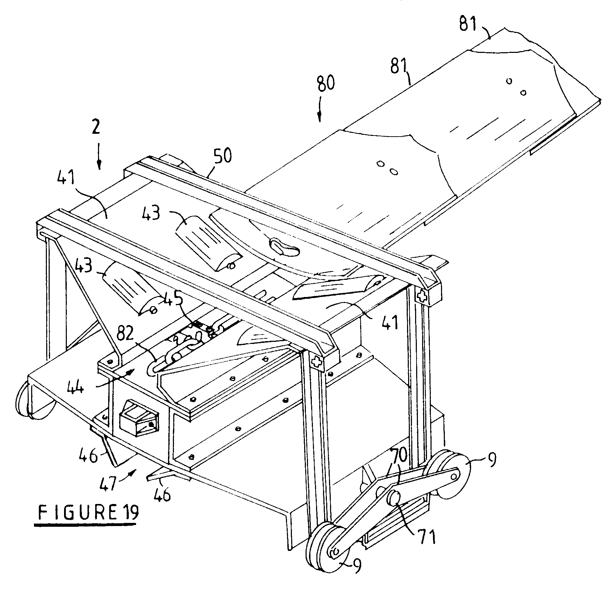

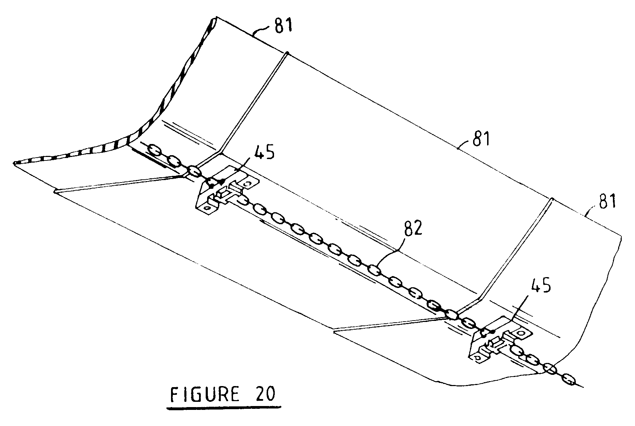

The elongated body of the haulage system 1 which is made up of the support frames 2, the end frames 3, the intermediate drive frames 21 and the tensioner frames 36, serves to carry and support an endless conveyor system 80 (Figures 19, 20, 22). The conveyor system 80 is made up of conveyor belt sections 81 arranged in end to end overlapping relationship and drawn by a round link conveyor chain 82 running centrally along the haulage system in the guide channels 44, 47 and to which the carrier members 45 are fixed at spaced intervals.

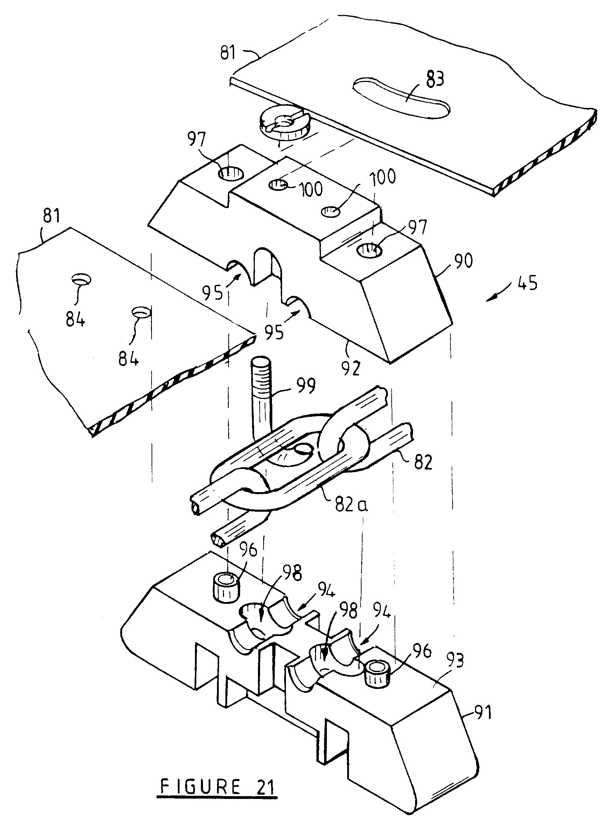

Each belt section 81 has an oval aperture 83 adjacent its rearward end and a pair of holes 84 adjacent its forward end (Figure 21). In an operative position, the forward end of each belt section 81 overlies the aperture 83 of the adjoining, underlying belt section where the overlying belt section is bolted to a carrier member 45 through the bolt holes 84. This is achieved in this embodiment of the invention by means of a pair of bolts 99 (only one of which is shown in Figure 21) emerging from holes 100 in the carrier member 45.

Each carrier member 45 comprises upper and lower parts 90, 91 having faces 92, 93 respectively which meet in an operative condition of the carrier member (Figure 21). The faces 92, 93 have recesses 94, 95 respectively therein which are so formed that when the faces meet, the recesses accommodate and trap a link 82a of the conveyor chain 82 therein. The lower part 91 of the carrier member 45 has ferrules 96 mounted thereon which are received in holes 97 in the upper part 90 and through which the parts 90, 91 can be bolted together. Sockets 98 are provided in the recesses 94 of the lower part 91 which serve to receive the hook sections of the pair of hook bolts 99 which are trapped in an operative position by the link 82a of the chain 82. The hook bolts 99 pass through holes 100 in the upper part 90 where they are used to secure a belt section 81 to the carrier member 45, as described above.

With this arrangement, adjoining belt sections 81 are readily capable of swivelling relative to one another in their major planes, thereby giving the conveyor system 80 lateral flexibility to accommodate turning of the haulage system. The conveyor system also has flexibility to accommodate vertical articulation of the haulage system.

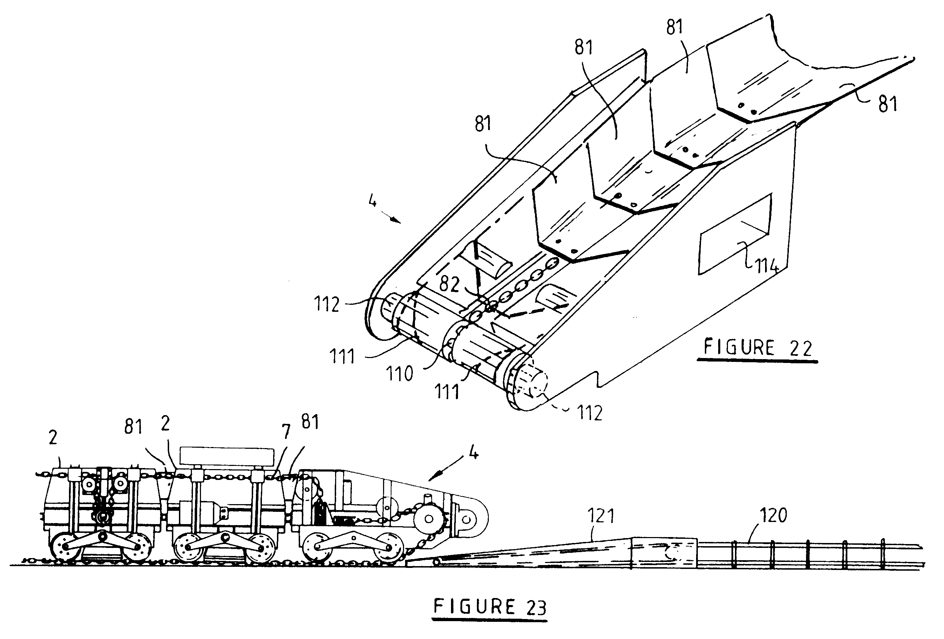

The conveyor chain 82 is driven at each end of the haulage system 1 by a sprocket 110 located between rollers 111 over which the conveyor belt sections 81 pass (Figure 22).

The sprockets 110 are driven in similar manner to the drive sprockets 5, 6, 26 described above, in this embodiment of the invention by hydraulic motors 112. In Figure 22 the hydraulic motors are shown schematically as being located within the sides of the end frame but they can also be positioned as shown in Figure 3.

In use of the conveyor system 80, the drive sprockets 110 located on the end frames 3, 4 are driven to rotate the conveyor chain 82 which advances the carrier members 45 along the guide channels 44 and 47 in orbital fashion. The conveyor system thus provides an upper load carrying run on the haulage system 1 in which the belt sections 81 fixed to the carrier members 45, are supported on the conveyor chain 82, on the idler rollers 43 and to some extent on the mounting plates 41, and a lower, return run in which the carrier members 45 are guided in the guide channels 47 and the belt sections 81 are supported on the idler rollers 48 (Figure 13).

During use of the conveyor system 80, spillage of material being conveyed may occur as a result of such material working its way under the conveyor belt sections 81 and into the guide channels 44. In order to rid the system of such spilled material an opening (not shown) may be provided in the base 49 of the channel 44 of the discharge end frame 4 through which the spilled material is swept as the carrier members 45 pass the opening. Such material may be removed from the conveyor system by suitable discharge means (not shown), for example through a side opening 114 in the end frame 4 (Figure 22). Should spillage of material occur on to the return section of the conveyor belt sections 81, such material will be carried on to the mounting plates 41. Spilled material on the mounting plates will gravitate to the guide channels 44 from where it will likewise be swept by the carrier members 45.

Material carried by the conveyor system 80 is, in this embodiment of the invention, intended to be conveyed from a continuous mining machine (not shown) and discharged on to a main conveyor 120 (Figure 23).

For this purpose a ramp 121 is provided flanking the main conveyor 120. In order to discharge material from the conveyor system 80, the haulage system 1 may be advanced up the ramp 121 until the discharge end frame 3 is suitably located above the main conveyor 120.

Other forms of discharge of material from the continuous haulage system may be employed. For example, the discharge end of the conveyor system 80 may be raised on the underlying support frames 2 by means of a suitable structure to give it sufficient elevation above ground level.

It is anticipated that the conveyor system 80 as described above which is of robust yet relatively simple construction will function effectively. In particular, the conveyor system is pliable in all directions, especially in lateral directions, enabling the haulage system to negotiate turns and uneven terrain.

## Claims

1. A conveyor system (80) for a self-propelled continuous haulage system (1) which comprises an elongated articulated body made up of a plurality of support frames (2) aligned in end-to-end abutting relationship, the conveyor system being carried by and supported centrally on the articulated body of the haulage system, the conveyor system being characterized in that it comprises a plurality of belt sections (81) arranged endlessly in end-to-end overlapping relationship, a plurality of carrier members (45), each belt section being connected to an associated carrier member such that adjacent belt sections permit relative lateral displacement therebetween, a conveyor chain (82) to which the carrier members are connected, the conveyor chain being located centrally on the continuous haulage system, drive means (110) for driving the conveyor chain to advance the endless conveyor system in orbital fashion along the length of the body of the haulage system in such a manner that the conveyor system has an upper load carrying run and a lower return run, the carrier members (45) being guided in a guide channel (44, 47) in each of the support frames (2).

2. A conveyor system as claimed in claim 1 in which each belt section (81) is connected to its associated carrier member (45) at a position where the belt section overlaps an underlying adjacent belt section, the connection between the belt section and its associated carrier member being made with one or more bolts (99) passing through an aperture (83) in the underlying belt section.

3. A conveyor system as claimed in claim 1 or 2 in which each carrier member (45) comprises two parts (90, 91) joining at opposed faces (92, 93) the faces being recessed to accommodate and receive the conveyor chain (82) therein.

4. A conveyor system as claimed in any one of claims 1 to 3 in which the drive means for driving the conveyor chain in orbital fashion comprise a drive sprocket (110) driven by an electrically or hydraulically powered motor (112) located at one or both ends of the haulage system.

5. A conveyor system (80) for a self-propelled continuous haulage system (1) which comprises an elongated articulated body made up of a plurality of support frames (2) aligned in end-to-end abutting relationship, the conveyor system being carried by and supported centrally on the articulated body of the haulage system, the conveyor system being characterized in that it comprises a plurality of belt sections (81) arranged endlessly in end-to-end overlapping relationship, means (45) for connecting adjacent belt sections to permit relative lateral displacement therebetween, and means (82) for advancing the endless conveyor system in orbital fashion along the length of the body of the haulage system in such a manner that the conveyor system has an upper load carrying run and a lower return run, further characterized in that the continuous haulage system (1) has traction means in the form of a pair of endless traction chains (7) carried on opposite sides of the support frames (2) and spanning the length of the body, the chains (7) engaging the ground in an operative condition of the system, and drive means (5, 6) for driving the chains to provide tractive and steering effort for the system.

## Patentansprüche

1. Beförderersystem (80) für ein selbstfahrendes kontinuierliches Fördersystem (1), welches einen länglichen gegliederten Körper aufweist, der aus einer Mehrzahl von Abstützrahmen (2) aufgebaut ist, die in einer Ende an Ende angrenzenden Beziehung ausgerichtet sind, wobei das Beförderersystem von dem gegliederten Körper des Fördersystems getragen ist und zentral auf diesem abgestützt ist, wobei das Beförderersystem dadurch gekennzeichnet ist, daß es eine Mehrzahl von Bandabschnitten (81), die endlos in einer Ende an Ende überlappenden Beziehung angeordnet sind, eine Mehrzahl von Trägerelementen (45), wobei jeder Bandabschnitt mit einem zugehörigen Trägerelement so verbunden ist, daß benachbarte Bandabschnitte eine relative seitliche Verlagerung dazwischen erlauben, eine Befördererkette (82), mit der die Trägerelemente verbunden sind, wobei die Befördererkette zentral an dem kontinuierlichen Fördersystem angeordnet ist, und eine Antriebseinrichtung (110) zum Antreiben der Befördererkette aufweist, um das Endlosbeförderersystem in umlaufender Weise entlang der Länge des Körpers des Förderersystems derart voranzubewegen, daß dar Beförderersystem ein oberes lastbeförderndes Trum und ein unteres Rückkehrtrum aufweist, wobei die Trägerelemente (45) in einem Führungskanal (44, 47) in jedem der Abstützrahmen (2) geführt sind.

2. Beförderersystem nach Anspruch 1, wobei jeder Bandabschnitt (81) mit seinem zugehörigen Trägerelement (45) an einer Position verbunden ist, wo der Bandabschnitt einen darunterliegenden benachbarten Bandabschnitt überlappt, wobei die Verbindung zwischen dem Bandabschnitt und seinem zugehörigen Trägerelement mit einem oder mehreren Bolzen (99) gebildet ist, welche(r) durch eine Öffnung (83) in dem darunterliegenden Bandabschnitt geht (gehen).

3. Beförderersystem nach Anspruch 1 oder 2, wobei jedes Trägerelement (45) zwei Teile (90, 91) aufweist, die an gegenüberliegenden Seiten (92, 93) miteinander verbunden sind, wobei die Seiten ausgenommen sind, um die Befördererkette (82) darin unterzubringen und aufzunehmen.

4. Beförderersystem nach einem der Ansprüche 1 bis 3, wobei die Antriebseinrichtung zum Antreiben der Befördererkette in umlaufender Weise ein Antriebskettenrad (110) aufweist, das von einem an einem oder beiden Enden des Fördersystems angeordneten elektrisch oder hydraulisch angetriebenen Motor (112) angetrieben wird.

5. Beförderersystem (80) für ein selbstfahrendes, kontinuierliches Fördersystem (1), welches einen länglichen gegliederten Körper aufweist, der aus einer Mehrzahl von Abstützrahmen (2) aufgebaut ist, die in einer Ende an Ende angrenzenden Beziehung ausgerichtet sind, wobei das Beförderersystem von dem gegliederten Körper des Fördersystems getragen ist und zentral auf diesem abgestützt ist, wobei das Beförderersystem dadurch gekennzeichnet ist, daß es eine Mehrzahl von Bandabschnitten (81), die endlos in einer Ende an Ende überlappenden Beziehung angeordnet sind, eine Einrichtung (45) zum Verbinden benachbarter Bandabschnittte, um eine relative seitliche Verlagerung dazwischen zu erlauben, und eine Einrichtung (82) zum Voranbewegen des endlosen Beförderersystems in umlaufender Weise entlang der Länge des Körpers des Beförderersystems derart aufweist, daß das Beförderersystem ein oberes lasttragendes Trum und ein unteres Rückkehrtrum aufweist, ferner dadurch gekennzeichnet, daß das kontinuierliche Fördersystem (1) eine Zugeinrichtung in der Form eines Paars von endlosen Zugketten (7), die an entgegengesetzten Seiten der Abstützrahmen (2) getragen sind und sich über die Länge des Körpers erstrecken, wobei die Ketten (7) mit dem Boden in einem Betriebszustand des Systems zusammenwirken, und eine Antriebseinrichtung (5, 6) zum Antreiben der Ketten aufweist, um einen Zug- und Steuerantrieb für das System zu liefern.

## Revendications

1. Système de transporteur (80) pour un système d'extraction continu autopropulsé (1) qui comporte un corps articulé allongé composé de plusieurs bâtis de support (2) alignés en relation de butée bout à bout, le système de transporteur étant porté par et supporté de manière centrale sur le corps articulé du système d'extraction, le système de transporteur étant caractérisé en ce qu'il comporte plusieurs sections de bande (81) disposées sans fin en relation de chevauchement bout à bout, plusieurs éléments porteurs (45), chaque section de bande étant reliée à un élément porteur associé de telle sorte que des sections de bande adjacentes permettent un déplacement latéral relatif entre elles, une chaîne de transporteur (82) à laquelle sont reliés les éléments porteurs, la chaîne de transporteur étant disposée de manière centrale sur le système d'extraction continu, des moyens d'entraînement (110) destinés à entraîner la chaîne de transporteur afin d'avancer le système de transporteur sans fin d'une manière orbitale sur la longueur du corps du système d'extraction d'une manière telle que le système de transporteur a un brin supérieur de transport de charge et un brin inférieur de retour, les éléments porteurs (45) étant guidés dans un canal de guidage (44, 47) dans chacun des bâtis de support (2).

2. Système de transporteur selon la revendication 1, dans lequel chaque section de bande (81) est reliée à son élément porteur (45) associé dans une position où la section de bande chevauche une section de bande adjacente sous-jacente, la liaison entre la section de bande et son élément porteur associé étant réalisée avec un ou plusieurs boulons (99) passant à travers une ouverture (83) dans la section de bande sous-jacente.

3. Système de transporteur selon la revendication 1 ou 2, dans lequel chaque élément porteur (45) comporte deux parties (90, 91) se rejoignant au niveau de faces opposées (92, 93), les faces étant renfoncées afin d'accepter et recevoir la chaîne de transporteur (82).

4. Système de transporteur selon l'une quelconque des revendications 1 à 3, dans lequel les moyens d'entraînement destinés à entraîner la chaîne de transporteur d'une manière orbitale comportent une roue dentée d'entraînement (110) entraînée par un moteur électrique ou hydraulique (112) disposé à une ou aux deux extrémités du système d'extraction.

5. Système de transporteur (80) pour un système d'extraction continu autopropulsé (1) qui comporte un corps articulé allongé composé de plusieurs bâtis de support (2) alignés en relation de butée bout à bout, le système de transporteur étant porté par et supporté de manière centrale sur le corps articulé du système d'extraction, le système de transporteur étant caractérisé en ce qu'il comporte plusieurs sections de bande (81) disposées sans fin en relation de chevauchement bout à bout, des moyens (45) destinés à relier des sections de bande adjacentes afin de permettre un déplacement latéral relatif entre elles, et des moyens (82) destinés à avancer le système de transporteur sans fin d'une manière orbitale sur la longueur du corps du système d'extraction d'une manière telle que le système de transporteur a un brin supérieur de transport de charge et un brin inférieur de retour, caractérisé en outre en ce que le système d'extraction continu (1) possède des moyens de traction sous la forme d'une paire de chaînes de traction sans fin (7) portées sur des côtés opposés des bâtis de support (2) et s'étendant sur toute la longueur du corps, les chaînes (7) engageant le sol dans une condition opérationnelle du système, et des moyens d'entraînement (5, 6) destinés à entraîner les chaînes afin de procurer un effort de traction et de direction pour le système.
